(19) Europäisches Patentamt
European Patent Office
Office européen des brevets

(11) **EP 3 152 511 B1**

(12) **EUROPEAN PATENT SPECIFICATION**

(45) Date of publication and mention
of the grant of the patent:
**04.04.2018 Bulletin 2018/14**

(21) Application number: **15713020.4**

(22) Date of filing: **24.02.2015**

(51) Int Cl.:
*F28D 21/00* (2006.01)     *F28D 7/10* (2006.01)
*F28D 7/16* (2006.01)     *F28G 9/00* (2006.01)
*D06B 23/20* (2006.01)

(86) International application number:
**PCT/IB2015/051375**

(87) International publication number:
**WO 2015/186006 (10.12.2015 Gazette 2015/49)**

(54) **AN APPARATUS FOR RECOVERING HEAT FROM A LIQUID FLOWING OUT OF AN INDUSTRIAL PLANT**

VORRICHTUNG ZUR RÜCKGEWINNUNG VON WÄRME AUS EINEM FLÜSSIGKEITSSTROM AUS EINER INDUSTRIEANLAGE

APPAREIL POUR RÉCUPÉRER LA CHALEUR PROVENANT D'UN LIQUIDE S'ÉCOULANT HORS D'UNE INSTALLATION INDUSTRIELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2014 IT MI20141044**

(43) Date of publication of application:
**12.04.2017 Bulletin 2017/15**

(73) Proprietor: **Albini Energia S.r.L.**
**24021 Albino (IT)**

(72) Inventors:
• **FINAZZI, Silvia**
**I-24035 Curno (bergamo) (IT)**

• **LANGONE, Donato**
**I-24127 Bergamo (IT)**
• **BUGLIONE, Pasquale**
**I-21100 Varese (IT)**

(74) Representative: **Tansini, Elio Fabrizio**
**Bugnion S.p.A.**
**Viale Lancetti 17**
**20158 Milano (IT)**

(56) References cited:
AT-A4- 509 213          DE-A1-102010 009 741
DE-U1-202012 100 798     GB-A- 2 428 468
US-A1- 2013 306 289

## Description

The present invention relates to an apparatus and a process for recovering heat from a liquid flowing out of an industrial plant, in particular a discharge liquid previously used for chemical processing and/or treatments, such as dyeing and/or bleaching, by which it is possible to obtain an efficient heat exchange and to carry out a cleaning operation of the means adapted to the heat recovery in a very quick and effective manner.

Currently the machines in continuous use in an industrial textile plant for chemical processing such as washing, mercerizing, or rope bleaching and open-width bleaching, use water as the working liquid and, once the working liquid has finished being used, is still at a temperature sufficiently high that it can be used to heat the clean working liquid flowing into the industrial plant, and in particular in the machine that carries out such processing.

In the patent IT 1263729 a system is presented which allows to exchange heat between the outflowing slurry flow and the incoming liquid flow through a casing in which is placed a rotating shaft which carries a series of communicating discs. The clean liquid flows within the disc. Instead, the slurry flowing out of the machine or the industrial plant is circulated inside the casing in such a manner that the surface of the discs ensures a certain heat exchange between the incoming liquid and the slurry from which the heat recovering is desired.

The slurry flowing out of the machining presents therein residues such as cotton dust or chemicals having film-forming or aggregating properties, which may be deposited on the heat transfer surfaces, or close to them, thereby lowering the efficiency of heat exchange.

The system of the above patent does not lend itself to a quick cleaning, because the cleaning of the fouling inside the casing requires the dismantlement of the system.

Moreover, this system facilitates the sedimentation of debris in the casing for the fact that the slurry is circulated around the discs whereby the speed relative to the walls of the casing is low and variable in direction. This aspect facilitates the sedimentation and accumulation of such debris. Again, the shape of the discs can create structural problems due the high efforts that are created in particular on the peripheral area of the same, as a result of, in certain conditions, the generation of water hammer. AT-A-509213 discloses an apparatus according to the preamble of claim 1. The object of the present invention is to provide an apparatus and a process for recovering heat from a polluted liquid flowing out of an industrial plant, in order to heat a clean liquid flowing into such a plant, which allows heat to be recovered with a higher heat exchange efficiency as compared to the systems currently known, and with fewer structural problems related to the pressure associated with the outflowing polluted and hotter liquid flow and/or with the incoming cleaner and colder liquid flow.

Another object of this invention is to provide an apparatus and a process for recovering heat from a polluted liquid flowing out of an industrial plant, in order to heat a clean liquid flowing into such a plant, which allows to perform the cleaning of the means for the circulation of the polluted liquid in a more quick and automatable manner than the systems currently known.

Further object of the present invention is to provide an apparatus and a process for recovering heat from a polluted liquid flowing out of an industrial plant, in order to heat a clean liquid flowing into such a plant, such that the exchange heat operation between polluted liquid and clean liquid is to be made in a such manner that the deposition of substances in the solid state on the surfaces of the means for the circulation of polluted liquid is less likely as compared to the systems currently known.

Such purposes are obtained by means of an apparatus and a process for recovering heat from a fluid flowing out of an industrial plant to heat a liquid flowing into such a plant, each comprising the technical characteristics exposed in one or more of the appended claims. The dependent claims correspond to different embodiments of the invention.

The features of the present invention will be clarified from the following detailed description related to a preferred embodiment thereof provided by way of illustration, and not limitation, of the more general claimed concepts.

The following description refers to the accompanying drawings, in which

- Figure 1 is a schematic view of an apparatus according to a preferred embodiment of the present invention;
- Figure 2 is a schematic sectional view of a detail of the plant of Fgure 1 along the line II-II and according to a first embodiment;
- Figure 3 is a schematic sectional view of a detail of the plant of Fgure 1 along the line II-II and according to a second embodiment;
- Figure 4 is a schematic view of a part of an embodiment of the present invention.

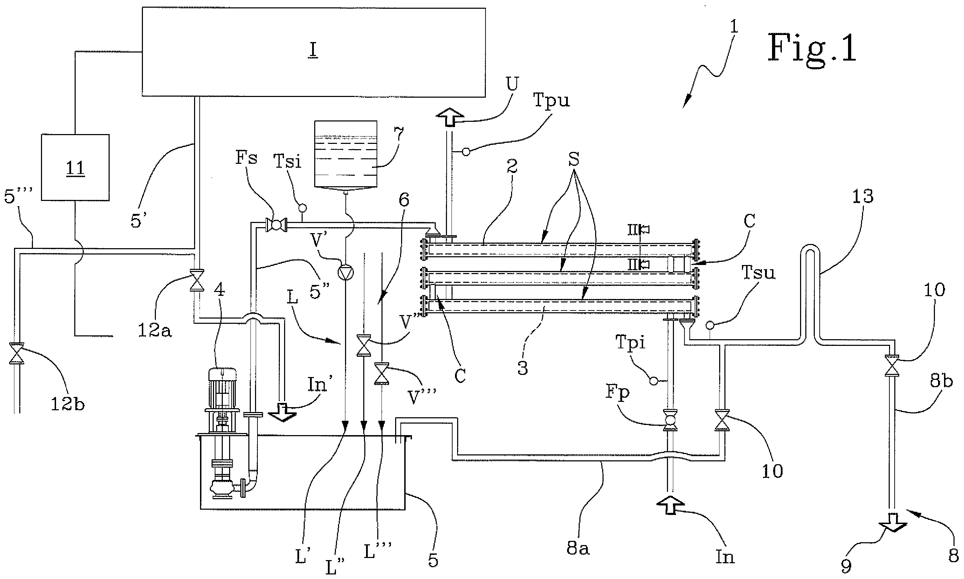

In Figure 1, with I is shown an industrial plant used preferably in the textile field, and that uses a liquid as the working fluid, in particular water.

1 denotes a preferred embodiment of an apparatus according to the present invention for recovering heat from a fluid flowing out of the industrial plant I in order to heat a liquid flowing into the plant. The apparatus 1 comprises a delivery conduit 2 of the incoming liquid adapted to be connected to the industrial plant I, and at least one recovery conduit 3 adapted to be traversed by the outflowing liquid.

"In" denotes an input flow in the delivery conduit 2 and "U" denotes a flow from the delivery conduit 2 disposed in fluid connection with the industrial plant I.

"In" denotes an input flow in the recovery conduit 3 coming from the industrial plant I.

The recovery conduit 3 is advantageously arranged inside the delivery conduit 2 and is operatively associated with at least a working machine 4 such as the outflowing liquid flows in the recovery conduit 3 with a pressure higher than the atmospheric pressure.

The delivery conduit 2 and the recovery conduit 3 comprise at least two flanked longitudinal sections S and connection means C between the at least two longitudinal sections S. In the example illustrated in Figure 1 three two by two, flanked longitudinal sections S have been provided, that are connected by connection means C.

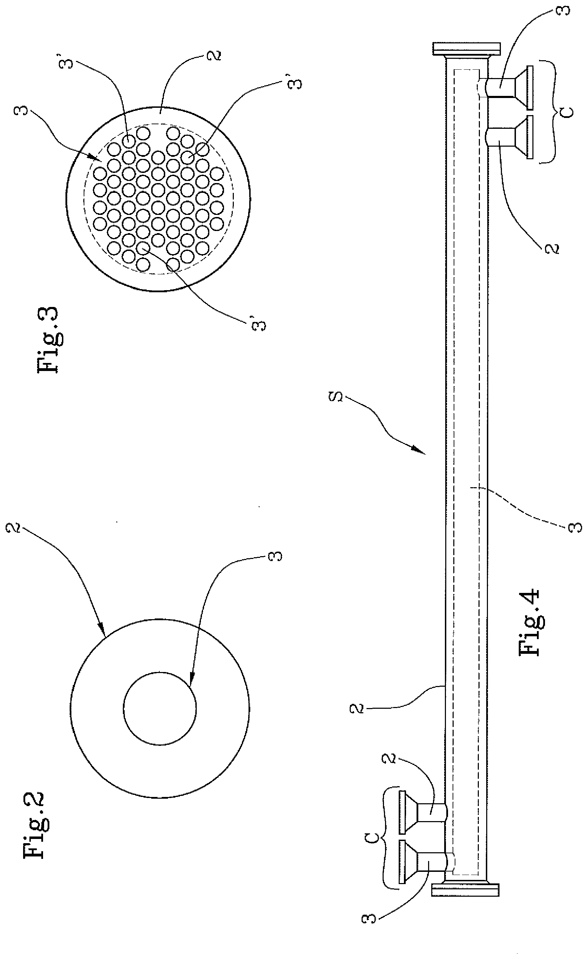

In Figure 4, which shows one of the longitudinal sections S of the recovery 3 and delivery conduits 2, it can be noted that in this arrangement the connection means C from a section S to the another one of Figure 1 are, at each end of each section S, the one in communication with the delivery conduit 2 and the other one with the recovery conduit 3.

In Figure 3 is shown a cross-section of the delivery 2 and recovery conduits 3, in which it can be noted that the recovery conduit 3 may advantageously comprises a plurality of recovery conduits 3' arranged inside the delivery conduit 2, so as to further reduce more the amount of dirt contained in the outflowing liquid that is deposited on the walls of the recovery conduit 3. In Figure 2 is shown another possible configuration of the delivery 2 and recovery conduits 3, such that the latter comprises a single conduit 3 inside the delivery conduit 2, which results in a structural simplification of this portion of the apparatus 1.

With reference to both the figures, the delivery conduit 2 is external to the recovery conduit whereby the incoming liquid occupies the space around the recovery conduit. The outflowing liquid occupies the space in the recovery conduit 3 which is preferably realized by means of one (or more) pipes defining at least an inner, cylindrical and smooth wall, i.e. devoid of protuberances or projections which would hinder the outflowing liquid flow.

The apparatus 1 advantageously comprises collection means 5, for example a collection tank, suitable to receive the liquid flowing out of the industrial installation I. In this case the working machine 4 is operatively interposed between the collecting means 5 and recovery the conduit 3, to ensure that the outflowing liquid is sent under pressure to the recovery conduit 3.

According to the example illustrated in the figures, connection conduits 5', 5" may be provided that are interposed between the industrial plant and the recovery conduit 3 for transferring the outflowing liquid. In particular, the collection means 5 are preferably arranged along these connection conduits 5', 5".

Furthermore, along the connection conduit 5', interposed between the plant I and the collection means 5, there is a bypass conduit 5'" adapted to allow the exclusion of the passage inside the collection means 5, and then inside the recovery conduit 3, of the polluted fluid from the plant I.

In this way, in the case in which the fluid (polluted liquid) from the plant I must be discharged into the sewer or in another apparatus, the valve 12a, placed on the connection conduit 5', is closed, and the valve 12b, placed on the bypass conduit 5'", is open, in order to attain the above-mentioned exclusion of the flow into the collection means 5. In contrast, by closing the valve 12b of the bypass conduit 5" and by opening the valve 12a of the connection conduit 5' is allowed the passage of the fluid from the plant I towards the collection means 5.

In order to carry out the washing operations of the recovery conduit 3, cleaning means 6 can be advantageously present, that are disposed in communication with the recovery conduit 3 for the introduction of the cleaning fluids in the recovery conduit, preferably water and lactic acid. The cleaning means 6 further comprise steam which is introduced into the recovery conduit (3) to heat said cleaning fluids.

These fluids allow to remove the residues and the fouling in contact with the surfaces of the recovery conduit 3.

To be able to perform an effective washing and possibly also a preliminary rinsing step, and/or a rinsing step after the actual washing, the cleaning means comprise input lines L for the cleaning fluids disposed in communication with the recovery conduit 3, preferably with the collection means 5. In particular, a first input line L' is placed in communication with a reservoir 7 of a cleaning substance, preferably lactic acid, and has a metering pump V' suitable for dispensing the acid according to predefined metered quantities according to the type of cleaning that must be implemented.

A second input line L" is placed in communication with a source of a rinsing substance, such as the water, and has a valve V" for the controlled delivery of such substance.

A third input line L'" is placed in communication with a source of steam for heating, in particular for heating the cleaning substance.

The steam input line L'" includes a system for managing the delivery of steam, provided with a valve V'" for the controlled delivery of the steam inside the collection means 5 in order to maintain the temperature of the cleaning fluids within a pre-set value. In this way, a temperature sensor Tsi on the conduit 5" measures the temperature of the washing fluid and activates the delivery of steam in the event that this temperature should be raised to a pre-set value. Again, the third input line L'" is preferably provided with a pressure reduction valve to delivery the steam inside the tank 5 at a pressure equal to or lower than 1 bar, thus avoiding excessive handling of the cleaning fluid (water and lactic acid) within the tank 5.

For the purpose of being able to quickly switch from the heat recovery step to the washing step, while maintaining a certain simplicity in the structural configuration of the apparatus 1, an outlet hydraulic circuit 8 can be advantageously provided that is connected to the recovery conduit 3. The hydraulic conduct 8 comprises a recovery conduit 8a suitable for setting the recovery conduit 3 and the collection means 5 in communication, and a drainage conduit 8b suitable for setting the recovery conduit 3 in communication with a drain 9.

In order to also facilitate the automation of the washing operations, the apparatus 1 comprises one or more valves 10 suitable for selectively setting the recovery conduit 3 in communication with the recovery conduit 8a or the drainage conduit 8b. In particular there is provided a valve 10 on the recovery conduit 8a and a valve 10 on the drainage conduit 8b.

Again, the drainage conduit 8b presents, upstream of the respective valve 10, a siphon 13 adapted to prevent the complete emptying of fluids from the recovery conduit 3. Therefore, this siphon 13 ensures to avoid, even in a condition of non-use of the apparatus 1, the emptying of the fluids from the conduit 3 while keeping the entire heat exchanger in a state of immersion.

Advantageously, the constant condition of immersion of the recovery conduit 3 prevents the formation of fouling on the internal surfaces of the recovery conduit 3 due to the presence of air and then to oxidation reactions of the pollutants present in the conduit 3 itself. Therefore, it is also maintained certain efficiency in the heat exchange of the recovery conduit 3 due precisely to the prevention of the surface structure of the conduit.

In use, the apparatus 1 allows to effectively recover the heat of a liquid flowing out of an industrial plant I. Even regardless of the aforementioned apparatus, a possible process for recovering heat from a fluid flowing out of an industrial plant to heat an incoming liquid in such a plant, according to the present invention, comprises:

> introducing the incoming liquid into the delivery conduit to be sent to the industrial plant,
> introducing the outflowing liquid into the recovery conduit disposed inside of the delivery conduit and having said outflowing liquid flow through the recovery conduit at a pressure higher than the atmospheric pressure.
> Before introducing it in the recovery conduit 3, it is preferable to collect the liquid flowing out of the installation, for example within the collection means 5.

In particular, it can be performed a wash cycle, which is carried out by means of a washing substance, preferably by lactic acid, preferably introduced into the collection means 5 disposed upstream of the recovery conduit 3, and sent to a pressure higher than the atmospheric pressure to the recovery conduit 3.

To this end, a control unit 11 can advantageously be present, that is programmed to detect the operating status of the industrial plant I and to activate the cleaning means 6 when the industrial plant I is inactive.

In accordance with a further embodiment, the cleaning means can also be activated during the operation of the industrial plant I by passing the fluid flowing out of the implant I through the bypass conduit 5'''. In this way, the outflowing fluid is discharged and is not conveyed in the apparatus 1 during the self-cleaning steps, thus guaranteeing the constant operation of the plant I.

Advantageously, a further step of activation of the cleaning means 6 is implemented by the control unit 11 by detecting a value of efficiency of the apparatus (1).

In accordance with this embodiment, the control means 11 are constituted by: a first temperature sensor Tsi placed in the connection conduit 5'' in the input of the heat exchange zone; a second temperature sensor Tsu placed on the hydraulic conduit 8 upstream of the siphon 13; a third temperature sensor Tpi placed in the input flow In of the conduit 2 upstream of the heat exchange zone; and a fourth temperature sensor Tpu placed in the outflowing flow U of the delivery conduit 2 downstream of the heat exchange zone.

Furthermore the control means 11 provide a flow meter Fs of the fluid placed in the connection conduit 5'' in the input of the heat exchange zone, and a flow meter Fp of the fluid Tpi placed in the input flow In of the delivery conduit 2 upstream of the heat exchange zone.

In this way, by detecting temperatures and flow rates of the fluids it is possible to obtain the yield value h calculated by a management logic unit (which is not described in detail being of known type) with the following formula:

$$h = \frac{(Tpu - Tpi) \times Fp}{Tsi \times Fs - Tpi \times Fp}$$

The yield value h calculated is then compared with a pre-set yield value indicating an operating condition of the apparatus 1 in which a cleaning action is required. Following this comparison, the logic unit provides for activating or not the above-mentioned cleaning means (6).

Advantageously, in this case the cleaning of the apparatus 3 is not only related to the mere operation or not of the plant I (and then only to the time spent in operation), but also to the measurement of the yield of the apparatus 1 and then to the apparatus's heat exchange capacity itself.

In order to reduce the consumption of the cleaning substance, the wash cycle preferably comprises at least a return step in which the cleaning substance from the recovery conduit 3 is re-sent to the recovery conduit 3, preferably being collected in the collection means 5. In this way the cleaning substance recirculates several times within the recovery conduit 3, and ensures an efficient cleaning.

To increase its cleaning effect, the wash cycle can advantageously comprise a heating step for heating the cleaning substance, for example by introduction of a gas (steam) into the collection means 5 or directly into the recovery conduit 3.

To eliminate the polluted liquid that leaves the plant I before the actual washing, at least a rinse cycle with a rinsing substance (for example water) can advantageously performed, the rinsing substance being preferably introduced into the collection means 5 disposed upstream of the recovery conduit 3, sent under a pressure higher than the atmospheric pressure to the recovery conduit 3. The rinsing substance exiting from the recovery conduit 3 is subsequently discharged through the discharge conduit 8b.

The rinse cycle can advantageously be carried out to eliminate the remaining cleaning substance, even after the actual wash cycle, during which it recirculates the cleaning substance.

The above described process may represent a possible sequence using the apparatus 1 according to the present invention.

**Claims**

1. An apparatus (1) for recovering heat from a polluted liquid flowing out of an industrial plant (I), so as to heat a liquid flowing into this plant (I), comprising a delivery conduit (2) for delivering said incoming liquid and that is suitable for being connected to said industrial plant system (I) and at least one recovery conduit (3) suitable for having said outflowing liquid flow through it, said recovery conduit (3) is disposed inside said delivery conduit (2) and is operationally associated with at least one working machine (4) so that said outflowing liquid passes through said recovery conduit (2) at a pressure higher than the atmospheric pressure; **characterized in that said apparatus (1) further comprising collection means (5) defining a collection tank suitable for receiving said liquid outflowing from the industrial plant,**
**said working machine (4) being operationally interposed between said collection means (5) and said recovery conduit (3).**

2. The apparatus (1) according to claim 1, comprising a plurality of recovery conduits (3) disposed inside a delivery conduit (2).

3. The apparatus (1) according to claim 1 or 2, wherein said delivery conduit (2) and said at least one recovery conduit (3) comprise at least two longitudinal sections (S) alongside each other and means for connecting (C) said at least two longitudinal sections (S).

4. The apparatus (1) according to claim **1**, comprising an outlet hydraulic circuit (8) connected to said at least one recovery conduit (3) and comprising a return conduit (8a) suitable for setting said recovery conduit (3) and said collection means (5) in communication, and a drainage conduit (8b) suitable for setting said recovery conduit (3) in communication with a drain (9).

5. The apparatus (1) according to claim **4**, comprising one or more valves (10) suitable for selectively setting said recovery conduit (3) in communication with said return conduit (8b) or said drainage conduit (8a).

6. The apparatus (1) according to one or more of the preceding claims, comprising cleaning means (6) disposed in communication with said recovery conduit (3) so as to introduce cleaning fluids in the recovery conduit (3), for example water and/or lactic acid.

7. The apparatus (1) according to the preceding claim, wherein said cleaning means (6) also introduces vapour into the recovery conduit (3) so as to heat said cleaning fluids.

8. The apparatus (1) according to claim **6 or** 7, wherein said cleaning means (6) comprises inlet lines (L) for said cleaning fluids and said vapour, said inlet lines (L) being disposed in communication with said collection means (5).

9. The apparatus according to the preceding claim, **characterized in that** said vapour inlet line (L''') comprises a management system for managing the supply of vapour inside the collection means (5) so as to maintain the temperature of the cleaning fluids at a predefined value.

10. The apparatus (1) according to any one of preceding claims **6 to 9,** comprising a control unit (11) that is programmed to detect the operating status of the industrial plant and to activate said cleaning means (6) when said industrial plant is inactive.

11. The apparatus (1) according to any one of claims **6 to 9**, comprising a control unit (11) that is programmed to detect a yield value of the apparatus (1) and to activate said cleaning means (6) conditional upon reaching a threshold time limit and/or when said yield value corresponds to a predefined yield value identifying an operating condition wherein a procedure for cleaning the apparatus (1) is required.

12. A procedure for recovering heat from a liquid flowing out of an industrial plant (I), so as to heat a liquid flowing into this plant (I), comprising:

   introducing said incoming liquid into a delivery conduit (2) to be sent to said industrial plant (I), introducing said outflowing liquid into at least one recovery conduit (3) disposed inside said delivery conduit (2) and operationally associated with at least one working machine so that said outflowing liquid

flow passes through said recovery conduit (3) at a pressure higher than the atmospheric pressure;

**collecting said lipuid flowing out of the plant (I) in collection tank (5), before the step of introducing it into said at least one recovery conduit (3);** and

operating said working machine (4) interposed between said collection means (5) and said recovery conduit (3).

13. The procedure according to claim **12**, comprising carrying out at least one rinse cycle with a rinsing substance, such as water for example, preferably introduced into a collection means (5) disposed upstream of said recovery conduit (3), wherein this rinsing substance is sent to said recovery conduit (3) at a pressure higher than the atmospheric pressure, and wherein at the end of the rinse cycle, said rinsing substance is drained through a drainage conduit (8b).

14. The procedure according to claim **12**, comprising at least one wash cycle for washing with a cleaning substance, for example lactic acid, preferentially introduced into the collection means (5) disposed upstream of said recovery conduit (3), and which is sent to said recovery conduit (3) at a higher pressure than the atmospheric pressure.

15. The procedure according to claim **12**, wherein said wash cycle comprises at least one return step wherein said cleaning substance flowing out of said recovery conduit (3) is sent back by means of a return conduit (8a), to this recovery conduit (3), preferably passing through collection means (5) again.

16. The procedure according to claim **14 or 15**, wherein said wash cycle comprises at least one step of heating said cleaning substance by means of the action of a gas, for example vapour introduced in collection means (5), so that this gas heats said cleaning substance.

17. The procedure according to claim **14**, wherein said wash cycle with the cleaning substance is activated by detecting a yield value of the apparatus (1) and comparing said detected value with a predefined yield value identifying an operating condition wherein a procedure for cleaning the apparatus (1) is required.

**Patentansprüche**

1. Vorrichtung (1) zur Rückgewinnung von Wärme aus einem verschmutzten Flüssigkeitsstrom aus einer Industrieanlage (I), sodass eine in diese Anlage (I) einströmende Flüssigkeit erwärmt wird, umfassend eine Zuleitung (2) für die Zuführung der einströmenden Flüssigkeit, die geeignet ist, um an das Industrieanlagensystem (I) angeschlossen zu werden, und mindestens eine Rückgewinnungsleitung (3), die geeignet ist, dass die ausströmende Flüssigkeit durch sie strömt, wobei die Rückgewinnungsleitung (3) in der Zuleitung (2) angeordnet und betriebswirksam mit mindestens einer Arbeitsmaschine (4) verbunden ist, sodass die ausströmende Flüssigkeit durch die Rückgewinnungsleitung (2) bei einem Druck strömt, der höher als der Atmosphärendruck ist,

**dadurch gekennzeichnet, dass** die Vorrichtung (1) zudem Sammelmittel (5) umfasst, die einen Sammeltank definieren, der geeignet ist, um die aus der Industrieanlage ausströmende Flüssigkeit aufzunehmen, wobei die Arbeitsmaschine (4) betriebswirksam zwischen den Sammelmitteln (5) und der Rückgewinnungsleitung (3) eingesetzt ist.

2. Vorrichtung (1) nach Anspruch 1, umfassend eine Vielzahl an Rückgewinnungsleitungen (3), die in einer Zuleitung (2) angeordnet sind.

3. Vorrichtung (1) nach Anspruch 1 oder 2, wobei die Zuleitung (2) und die mindestens eine Rückgewinnungsleitung (3) mindestens zwei Längsabschnitte (S) umfassen, die nebeneinander angeordnet sind, sowie Mittel zum Verbinden (C) der mindestens zwei Längsabschnitte (S).

4. Vorrichtung (1) nach Anspruch 1, umfassend einen hydraulischen Auslasskreislauf (8), verbunden mit der mindestens einen Rückgewinnungsleitung (3) und umfassend eine Rückführungsleitung (8a), die geeignet ist, um die Rückgewinnungsleitung (3) und die Sammelmittel (5) miteinander in Kommunikation zu setzen, und eine Abführungsleitung (8b), die geeignet ist, um die Rückgewinnungsleitung (3) mit einem Abfluss (9) in Kommunikation zu setzen.

5. Vorrichtung (1) nach Anspruch 4, umfassend ein oder mehrere Ventile (10), die geeignet sind, um die Rückgewinnungsleitung (3) selektiv mit der Rückführungsleitung (8b) oder der Abführungsleitung (8a) in Kommunikation zu setzen.

6. Vorrichtung (1) nach einem oder mehreren der vorhergehenden Ansprüche, umfassend Reinigungsmittel (6), die in Kommunikation mit der Rückgewinnungsleitung (3) angeordnet sind, sodass Reinigungsmedien in die Rückgewinnungsleitung (3) eingeleitet werden, zum Beispiel Wasser und/oder Milchsäure.

**7.** Vorrichtung (1) nach dem vorhergehenden Anspruch, wobei die Reinigungsmittel (6) auch Dampf in die Rückgewinnungsleitung (3) einleiten, um die Reinigungsmedien zu erhitzen.

**8.** Vorrichtung (1) nach Anspruch 6 oder 7, wobei die Reinigungsmittel (6) Einlassleitungen (L) für die Reinigungsmedien und den Dampf umfassen und die Einlassleitungen (L) in Kommunikation mit den Sammelmitteln (5) angeordnet sind.

**9.** Vorrichtung nach dem vorhergehenden Anspruch, **dadurch gekennzeichnet, dass** die Dampfeinlassleitung (L") ein Handhabungssystem für die Handhabung der Dampfzufuhr in die Sammelmittel (5) umfasst, sodass die Temperatur der Reinigungsmedien auf einem vorgegebenen Wert beibehalten wird.

**10.** Vorrichtung (1) nach einem der vorhergehenden Ansprüche 6 bis 9, umfassend eine Steuereinheit (11), die programmiert ist, um den Betriebszustand der Industrieanlage zu erfassen und die Reinigungsmittel (6) zu aktivieren, wenn die Industrieanlage inaktiv ist.

**11.** Vorrichtung (1) nach einem der Ansprüche 6 bis 9, umfassend eine Steuereinheit (11), die programmiert ist, um einen Ertragswert der Vorrichtung (1) zu erfassen und die Reinigungsmittel (6) abhängig vom Erreichen einer Schwellenzeitgrenze und/oder wenn der Ertragswert einem vorgegebenen Ertragswert entspricht, der einen Betriebszustand identifiziert, in dem ein Verfahren zum Reinigen der Vorrichtung (1) erforderlich ist, zu aktivieren.

**12.** Verfahren zur Rückgewinnung von Wärme aus einem Flüssigkeitsstrom aus einer Industrieanlage (I), um eine Flüssigkeit zu erwärmen, die in diese Anlage (I) einströmt, umfassend:

Einleiten der einströmenden Flüssigkeit in eine Zuleitung (2), um der Industrieanlage (I) zugeführt zu werden;
Einleiten der ausströmenden Flüssigkeit in mindestens eine Rückgewinnungsleitung (3), die in der Zuleitung (2) angeordnet und betriebswirksam mit mindestens einer Arbeitsmaschine assoziiert ist, sodass die ausströmende Flüssigkeit durch die Rückgewinnungsleitung (3) bei einem Druck strömt, der höher ist als der Atmosphärendruck;
Sammeln der aus der Anlage (I) ausströmenden Flüssigkeit in einem Sammeltank (5) vor dem Schritt zu deren Einleiten in die mindestens eine Rückgewinnungsleitung (3); und
Betreiben der Arbeitsmaschine (4), die zwischen den Sammelmitteln (5) und der Rückgewinnungsleitung (3) eingesetzt ist.

**13.** Verfahren nach Anspruch 12, umfassend das Durchführen von mindestens einem Spülzyklus mit einer Spülsubstanz wie beispielsweise Wasser, die vorzugsweise in Sammelmittel (5) eingeleitet wird, die vor der Rückgewinnungsleitung (3) angeordnet sind, wobei diese Spülsubstanz der Rückgewinnungsleitung (3) bei einem Druck zugeleitet wird, der höher ist als der Atmosphärendruck, und wobei die Spülsubstanz am Ende des Spülzyklus durch eine Abführungsleitung (8b) abgeführt wird.

**14.** Verfahren nach Anspruch 12, umfassend mindestens einen Waschzyklus zum Waschen mit einer Reinigungssubstanz wie beispielsweise Milchsäure, die vorzugsweise in die Sammelmittel (5) eingeleitet wird, die vor der Rückgewinnungsleitung (3) angeordnet sind, und die der Rückgewinnungsleitung (3) bei einem Druck zugeleitet wird, der höher ist als der Atmosphärendruck.

**15.** Verfahren nach Anspruch 12, wobei der Waschzyklus mindestens einen Rückführungsschritt umfasst, wobei die Reinigungssubstanz, die aus der Rückgewinnungsleitung (3) ausströmt, mittels einer Rückführungsleitung (8a) wieder dieser Rückgewinnungsleitung (3) zugeführt wird, wobei sie vorzugsweise erneut durch die Sammelmittel (5) strömt.

**16.** Verfahren nach Anspruch 14 oder 15, wobei der Waschzyklus mindestens einen Schritt zum Erwärmen der Reinigungssubstanz mittels der Wirkung eines Gases, zum Beispiel in die Sammelmittel (5) eingeleiteten Dampfs, umfasst, sodass dieses Gas die Reinigungssubstanz erwärmt.

**17.** Verfahren nach Anspruch 14, wobei der Waschzyklus mit der Reinigungssubstanz durch die Erkennung eines Ertragswerts der Vorrichtung (1) und das Vergleichen des erkannten Werts mit einem vorgegebenen Ertragswert, der einen Betriebszustand identifiziert, in dem ein Verfahren zum Reinigen der Vorrichtung (1) erforderlich ist, aktiviert wird.

**Revendications**

**1.** Appareil (1) pour récupérer la chaleur provenant d'un liquide pollué s'écoulant hors d'une installation industrielle (I), de manière à chauffer un liquide s'écoulant dans cette installation (I), comprenant une conduite de refoulement (2) pour distribuer ledit liquide entrant et étant adaptée pour être raccordée au dit système d'installation industrielle (I) et au moins une conduite de récupération (3) adaptée pour comporter ledit flux de liquide sortant à travers celle-ci, ladite conduite de récupération (3) est disposée à l'intérieur de ladite conduite de refoulement (2) et est fonctionnellement associée à au moins une machine de travail (4) de sorte que ledit liquide sortant passe à travers ladite conduite de récupération (2) à une pression supérieure à la pression atmosphérique ; **caractérisé en ce que** ledit appareil (1) comprend de plus des moyens de collecte (5) définissant un réservoir de collecte adapté pour recevoir ledit liquide sortant de l'installation industrielle, ladite machine de travail (4) étant fonctionnellement interposée entre lesdits moyens de collecte (5) et ladite conduite de récupération (3).

2. Appareil (1) selon la revendication 1, comprenant une pluralité de conduites de récupération (3) disposées à l'intérieur d'une conduite de refoulement (2).

3. Appareil (1) selon la revendication 1 ou 2, dans lequel ladite conduite de refoulement (2) et ladite au moins une conduite de récupération (3) comprennent au moins deux sections longitudinales (S) à côté l'une de l'autre et des moyens pour raccorder (C) lesdites au moins deux sections longitudinales (S).

4. Appareil (1) selon la revendication 1, comprenant un circuit hydraulique de sortie (8) relié à ladite au moins une conduite de récupération (3) et comprenant une conduite de retour (8a) adaptée pour mettre en communication ladite conduite de récupération (3) et lesdits moyens de collecte (5) et une conduite de vidange (8b) adaptée pour mettre en communication ladite conduite de récupération (3) avec un égout (9).

5. Appareil (1) selon la revendication 4, comprenant une ou plusieurs vannes (10) prévues pour sélectivement mettre en communication ladite conduite de récupération (3) avec ladite conduite de retour (8b) ou ladite conduite de vidange (8a).

6. Appareil (1) selon l'une ou plusieurs des revendications précédentes, comprenant des moyens de nettoyage (6) disposés en communication avec ladite conduite de récupération (3) de sorte à introduire des fluides de nettoyage dans la conduite de récupération (3), par exemple de l'eau et/ou de l'acide lactique.

7. Appareil (1) selon la revendication précédente, dans lequel lesdits moyens de nettoyage (6) introduisent aussi de la vapeur dans la conduite de récupération (3) de manière à chauffer lesdits fluides de nettoyage.

8. Appareil (1) selon la revendication 6 ou 7, dans lequel lesdits moyens de nettoyage (6) comprennent des conduites d'entrée (L) pour lesdits fluides de nettoyage et ladite vapeur, lesdites conduites d'entrée (L) étant disposées en communication avec lesdits moyens de collecte (5).

9. Appareil selon la revendication précédente, **caractérisé en ce que** ladite conduite d'entrée de vapeur (L''') comprend un système de gestion servant à gérer la fourniture de vapeur à l'intérieur des moyens de collecte (5) de manière à maintenir la température des fluides de nettoyage à une valeur prédéfinie.

10. Appareil (1) selon l'une quelconque des revendications précédentes de 6 à 9, comprenant une unité de commande (11) étant programmée pour détecter l'état de fonctionnement de l'installation industrielle et pour activer lesdits moyens de nettoyage (6) lorsque ladite installation industrielle est inactive.

11. Appareil (1) selon l'une quelconque des revendications de 6 à 9, comprenant une unité de commande (11) étant programmée pour détecter une valeur de rendement de l'appareil (1) et pour activer lesdits moyens de nettoyage (6) sous condition que soit atteinte une limite seuil de durée et/ou lorsque ladite valeur de rendement correspond à une valeur de rendement prédéfinie identifiant une condition de fonctionnement dans laquelle une procédure de nettoyage de l'appareil (1) est requise.

12. Procédure de récupération de la chaleur à partir d'un liquide s'écoulant hors d'une installation industrielle (I), de manière à chauffer un liquide s'écoulant dans cette installation (I), comprenant :

introduire ledit liquide entrant dans une conduite de refoulement (2) pour être envoyé à ladite installation industrielle (I),
introduire ledit liquide sortant dans au moins une conduite de récupération (3) disposée à l'intérieur de ladite conduite de refoulement (2) et fonctionnellement associée à au moins une machine de travail de sorte que ledit flux de liquide sortant passe à travers ladite conduite de récupération (3) à une pression supérieure à la pression atmosphérique ;
collecter ledit liquide s'écoulant hors de l'installation (I) dans un réservoir de collecte (5) avant l'étape consistant à l'introduire dans ladite au moins une conduite de récupération (3) ; et
faire fonctionner ladite machine de travail (4) interposée entre lesdits moyens de collecte (5) et ladite conduite de récupération (3).

13. Procédure selon la revendication 12, comprenant la réalisation d'au moins un cycle de rinçage avec une substance de rinçage, comme de l'eau par exemple, de préférence introduite dans un moyen de collecte (5) disposé en amont de ladite conduite de récupération (3), dans laquelle cette substance de rinçage est envoyée à ladite conduite de récupération (3) à une pression supérieure à la pression atmosphérique, et dans laquelle au terme du cycle de rinçage, ladite substance de rinçage est évacuée par une conduite d'égout (8b).

14. Procédure selon la revendication 12, comprenant au moins un cycle de lavage destiné au lavage avec une substance de nettoyage, par exemple de l'acide lactique, de préférence introduit dans les moyens de collecte (5) disposés en amont de ladite conduite de récupération (3), et qui est envoyé à ladite conduite de récupération (3) à une pression supérieure à la pression atmosphérique.

15. Procédure selon la revendication 12, dans laquelle ledit cycle de lavage comprend au moins une étape de retour dans laquelle ladite substance de nettoyage, s'écoulant hors de ladite conduite de récupération (3), est renvoyée par le biais d'une conduite de retour (8a) vers cette conduite de récupération (3) passant de préférence à nouveau par les moyens de collecte (5).

16. Procédure selon la revendication 14 ou 15, dans laquelle ledit cycle de lavage comprend au moins une étape consistant à chauffer ladite substance de nettoyage par l'action d'un gaz, par exemple de la vapeur introduite dans les moyens de collecte (5), de manière à ce que ce gaz chauffe ladite substance de nettoyage.

17. Procédure selon la revendication 14, dans laquelle ledit cycle de lavage avec la substance de nettoyage est activé en détectant une valeur de rendement de l'appareil (1) et en comparant ladite limite détectée à une valeur de rendement prédéfinie identifiant une condition de fonctionnement dans laquelle une procédure de nettoyage de l'appareil (1) est requise.

Fig.1

EP 3 152 511 B1

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1263729

- AT 509213 A